(19) Europäisches Patentamt
European Patent Office
Office européen des brevets

(11) Numéro de publication: **0 145 561**
**B1**

(12) # FASCICULE DE BREVET EUROPÉEN

(45) Date de publication du fascicule du brevet: **13.01.88**

(51) Int. Cl.⁴: **C 25 B 13/04**

(21) Numéro de dépôt: **84402326.7**

(22) Date de dépôt: **15.11.84**

(54) **Matériau fibreux pour diaphragme d'électrolyseur et diaphragme comportant un tel matériau.**

(30) Priorité: **18.11.83 FR 8318380**

(43) Date de publication de la demande:
**19.06.85 Bulletin 85/25**

(45) Mention de la délivrance du brevet:
**13.01.88 Bulletin 88/2**

(84) Etats contractants désignés:
**AT BE CH DE FR GB IT LI LU NL SE**

(56) Documents cité:
**EP-A-0 025 930**
**DE-A-2 717 512**

**PATENTS ABSTRACTS OF JAPAN, vol. 5, no. 94 (C-59) 766, 19 juin 1981**
**CHEMICAL ABSTRACTS, vol. 84, no. 24, 14 juin 1976, page 457, résumé no. 171391s, Columbus, Ohio, US; G. KISSEL et al.: "Hydrogen production by water electrolysis. Methods for approaching ideal efficiencies"**

(73) Titulaire: **ALSTHOM, 38, avenue Kléber, F-75784 Paris Cédex 16 (FR)**
Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Tournoux, Michel, 24, rue Noire, F-44000 Nantes (FR)**
Inventeur: **Marchand, René, 13, Hameau des Bocages, F-44470 Sainte Luce sur Loire (FR)**
Inventeur: **Patarin, Joel, 6, rue Guilloteau, F-79000 Niort (FR)**

(74) Mandataire: **Weinmiller, Jürgen, Lennéstrasse 9 Postfach 24, D-8133 Feldafing (DE)**

**EP 0 145 561 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

L'invention concerne un matériau fibreux destiné à constituer un diaphragme d'électrolyseur, ainsi que le diaphragme comportant un tel matériau.

Parmi les différents procédés de stockage de l'énergie électrique actuellement utilisés, on peut citer le stockage chimique sous forme d'hydrogène, qui met en oeuvre l'électrolyse de l'eau.

Celle-ci peut intervenir, par exemple, dans des cellules d'électrolyse montées en série, chaque électrode étant bipolaire et constituant l'anode d'une cellule et la cathode de la cellule suivante.

L'électrolyte doit être une solution aqueuse de haute conductivité. Les solutions salines ne sont pas employées en raison de la decomposition possible du sel qu'elles contiennent, par exemple par oxydation anodique de l'anion. Les solutions d'acides forts soulèvent, elles, des problèmes de corrosion. L'électrolyte idéal est une solution de potasse de concentration comprise entre 25 et 50 %, en masse.

Les électrodes doivent avoir une grande surface, être aussi proches que possible les unes des autres, et présenter une grande résistance à la corrosion, ainsi qu'une bonne activité limitant les surtensions. Pour des températures de fonctionnement inférieures à 100° C, la cathode est habituellement en acier doux, l'anode, pour laquelle les risques de corrosion sont plus grands, est habituellement en nickel, ou en acier recouvert d'un dépôt électrolytique non poreux de nickel. Au dessus de 100° C les deux électrodes sont en nickel.

Le rôle du separateur, ou diaphragme, est:

- d'empêcher les deux électrodes de se toucher
- d'éviter qu'à l'intérieur de la cellule d'électrolyse, les bulles d'hydrogène ne viennent au contact des bulles d'oxygène.

Il doit s'agir d'un diaphragme poreux à l'électrolyte, c'est-à-dire permettant la conduction ionique. Pour que celle-ci soit élevée, il faut que le diaphragme soit très mince; il doit avoir néanmoins une bonne résistance mécanique.

Les pores doivent rester pleins de liquide, c'est-à-dire, ne pas se remplir de gaz, ni se boucher; de plus le diaphragme doit avoir une très longue durée de vie.

Les électrolyseurs industriels, actuellement en fonctionnement, utilisent des séparateurs en toile d'amiante, ou en feutre de fibres d'amiante.

L'augmentation de la densité de courant dans les électrolyseurs du type "filtre-presse" permettra d'en abaisser le coût. Dans l'objectif d'augmenter le rendement, on cherche à diminuer la chute ohmique interne, par le choix d'une température de service comprise entre 120 et 200° C. La température maximale d'utilisation normale des séparateurs à amiante classique est de 80 à 90° C, ce qui limite fortement la performance des électrolyseurs à électrodes non catalytiques: environ 1,8 volt sous une densité de courant de 0,2 $A/cm^2$. Des essais de courtes durées ont montré qu'en opérant à 160° C, il est possible d'abaisser la tension à 1,5 V sous 0,5 $A/cm^2$ en utilisant une technique non catalytique.

A cette température, l'amiante ne résiste pas à la corrosion, de sorte que la stabilisation d'une telle performance nécessite la mise en oeuvre d'un matériau nouveau pour la fabrication des diaphragmes.

A ce titre, il a été proposé d'utiliser pour la fabrication des diaphragmes des titanates de potassium fibreux, éventuellement liés à du polytétrafluoréthylène.

Toutefois, si la résistance à la corrosion de ces matériaux dans des solutions de potasse concentrées à des températures comprises entre 120 et 160° C est nettement améliorée par rapport à l'amiante, elle n'en demeure pas moins insuffisante. Il en est de même de la stabilité thermique. C'est pourquoi la Demanderesse a effectué de nombreux essais en vue d'améliorer ces propriétés sur un matériau de ce type.

La présente invention a pour objet un matériau fibreux pour diaphragme d'électrolyseur, utilisant comme électrolyte une solution aqueuse de potasse, caractérisé par le fait que ledit matériau répond à une formule dérivant de celle de l'octatitanate de potassium $K_2 Ti_8 O_{17}$, dans laquelle les ions titane au degré d'oxydation 4 sont substitués partiellement par des cations métalliques stables en site octaédrique et de degré d'oxydation inférieur à quatre, la compensation de charge, du fait de ladite substitution, étant assurée par l'introduction d'ions alcalins choisis parmi le sodium, le potassium et le lithium.

Les cations de substitution, de valence 2, étant représentés par $M^{II}$, et $M^{I}$ désignant un ion alcalin choisi parmi le sodium, le potassium et le lithium, la formule du matériau conforme à l'invention est:

$K_2 M^{I}_{2x} Ti_{8-x} M^{II}_{x} O_{17}$ (A)

avec $0 < x \leqslant 0{,}5$

A titre illustratif, M peut être choisi parmi Mg et Ni.

On a pu constater que la facilité d'élaboration de ces matériaux, leur stabilité thermique et chimique et leur résistance à la corrosion s'améliorent d'autant plus que x est voisin de 0,5.

Les cations de substitution, de valence 3, étant représentés par $M^{III}$ et $M^{I}$ ayant la même signification que précédemment, la formule du matériau conforme à l'invention est dans ce cas:

$K_2 M^{I}_{y} Ti_{8-y} M^{III}_{y} O_{17}$ (B)

avec $0 < y \leqslant 1$

A titre illustratif $M^{III}$ peut être choisi parmi Fe, Al, Cr, Ti, Ga

On a pu constater que la facilité d'élaboration de ces matériaux, leur stabilité thermique et chimique et leur résistance à la corrosion s'améliorent d'autant plus que y est voisin de 1.

Les cations de substitution $M^{II}$ et $M^{III}$ peuvent être simultanément présents dans le matériau. La formule de celui-ci est alors

$$K_2 M^{I}_{(2x+y)} Ti_{8-(x+y)} M^{II}_x M^{III}_y O_{17}$$

avec $0 < 2x+y \leqslant 1$

Selon l'invention, ces matériaux peuvent être obtenus sous forme de fibres par pyrolyse d'un mélange intime comprenant:

- un compose oxygène décomposable du titane, ou l'oxyde $TiO_2$
- un composé oxygéné décomposable du métal $M^{II}$ de valence 2, et/ou du métal $M^{III}$ de valence 3 et/ou des oxydes correspondants $M^{II}O$ et/ou $M^{III}_2 O_3$
- un sel décomposable du métal alcalin $M^I$
- un flux

puis l'élimination dudit flux.

Les composés décomposables précités ou les oxydes $TiO_2$, $M^{II}O$ et $M^{III}_2 O_3$ sont en proportions stoéchiométriques par rapport aux formules indiquées ci-dessus, un excès du sel décomposable de métal alcalin $M^I$, de l'ordre de 5 %, pouvant toutefois être prévu pour compenser les pertes par volatilité.

La quantité de flux mise en jeu et la nature de celui-ci, ainsi que le programme de traitement thermique permettent de contrôler la morphologie des fibres obtenues.

A titre illustratif et nullement limitatif le rapport molaire entre le flux et le sel du métal alcalin $M^I$ peut être compris entre et 25.

La température du traitement thermique est également fonction de la nature du métal $M^{II}$ ou $M^{III}$.

Le sel décomposable du métal alcalin $M^I$ peut être un carbonate, $M^I_2CO_3$.

Le flux peut être choisi parmi K Cl, un mélange d'halogénures alcalins et le molybdate de potassium.

Si le cation de substitution est choisi parmi Al, Fe, Ga, la température du traitement est avantageusement comprise entre 1000 et 1100° C. Pour Cr et Mg, elle est avantageusement comprise entre 700 et 900° C. Pour Ti, au degré d'oxydation 3, elle sera avantageusement supérieure à 1000° C.

Pour Ni elle sera avantageusement comprise entre 800 et 900° C.

D'une manière, générale, plus x et y sont élevés, plus la température du traitement est élevée.

La pyrolyse du mélange peut être effectuée dans un creuset en alumine frittée muni d'un couvercle.

Dans certains cas, la pyrolyse est, de préférence, effectuée sous atmosphère contrôlée.

Ainsi dans le cas où $M^{III}$ est le chrome ou le titane, l'atmosphère doit être non oxydante.

Les produits obtenus après traitement thermique sont lavés et dispersés dans de l'eau distillée pendant 24 heures environ, ce qui permet d'éliminer totalement le flux.

Les fibres sont finalement séparées par filtration et séchées.

Ces fibres sont caractérisées quant à la nature de la phase qui les constitue par leur diagramme de diffraction X, mettant en évidence leur isomorphie avec le bronze oxygéné de titane $K_3 Ti_8 O_{17}$ et avec l'octatitanate $K_2 Ti_8 O_{17}$.

A titre d'exemple, les mailles monocliniques de $K_3 Ti_{7,5} Mg_{0,5} O_{17}$ et $K_3 Ti_7 Fe O_{17}$ ont respectivement pour paramètres:

| | | | |
|---|---|---|---|
| a = 15,61 (2) Å | b = 3,816 (4) Å | c = 12,07 (2) Å | ß = 94,9 (1)° |
| a = 15,64 (2) Å | b = 3,809 (3) Å | c = 12,02 (2) Å | ß = 95,3 (1)° |

Les paramètres de $K_3 Ti_8 O_{17}$ et $K_2 Ti_8 O_{17}$ sont respectivement:

| | | | |
|---|---|---|---|
| a = 15,68 (1) Å | b = 3,809 (3) Å | c = 12,06 (1) Å | ß = 95,0° |
| a = 15,62 (2) Å | b = 3,77 (2) Å | c = 11,93 (3) Å | ß = 95,8° |

Ces fibres sont également caractérisées quant à leur texture par la mesure de leur longueur L et de leur seconde plus grande dimension D.

A titre d'exemple, le tableau suivant rassemble les résultats concernant $K_3 Ti_{7,5} Mg_{0,5} O_{17}$ et $K_3 Ti_7 FeO_{17}$

| | $K_3 Ti_{7,5} Mg_{0,5} O_{17}$ | $K_3 Ti_7 FeO_{17}$ |
|---|---|---|
| L (μ) | 5 à 10 | 10 à 15 |
| D (μ) | 0,06 à 0,14 | 0,3 à 1 |
| L/D | 35 à 150 | 10 à 50 |

D'autres caractéristiques et avantages de l'invention ressortiront de la description qui va suivre d'exemples de réalisation de matériaux utilisables conformément à l'invention pour la fabrication de diaphragmes d'électrolyseur.

**Exemple 1**

Obtention de $K_3 Ti_{7,5} Mg_{0,5} O_{17}$ sous forme fibreuse; ce composé correspond à la formule (A) précitée dans laquelle:

$M^I$:K $M^{II}$:Mg $x=0,5$

Un mélange intime de produits pulvérulents est constitué par broyage et homogénéisation de:

15,75 g de $TiO_2$, 0,53 g de MgO, 5,72 g de $K_2CO_3$ et 60 g de KCl,

ce dernier composé constituant le flux. L'excès de carbonate de potassium $K_2CO_3$ est d'environ 5 % par rapport aux proportions stoechiométriques. Le rapport molaire $KCl/K_2CO_3$ est de 19,5.

Ce mélange, placé dans un creuset d'alumine frittée, fermé par un couvercle, est soumis au traitement thermique suivant: montée en température à 800°C à la vitesse de 200°C/h, maintien à cette température pendant 24 heures, refroidissement à la vitesse de 400°C/h.

Le produit obtenu, pesant 75 g environ, est dispersé et agité dans 900 à 1000 $cm^3$ d'eau distillée pendant 24 heures, ce qui entraîne la dissolution totale du flux. Les fibres, finalement séparées par filtration, sont lavées et séchées. Les fibres obtenues sont blanches.

Les caractéristiques morphologiques des fibres ainsi préparées ont été précisées ci-dessus.

**Exemple 2**

Obtention de $K_3 Ti_{17} FeO_{17}$ sous forme fibreuse; ce composé correspond à la formule (B) précitée dans laquelle:

$M^I$:K $M^{III}$:Fe $y=1$

Un mélange intime de produits pulvérulents est constitué par broyage et homogénéisation de:

7 g de $TiO_2$, 1 g de $Fe_2O_3$, 2,75 g de $K_2CO_3$ et 16 g de $K_2MoO_4$,

ce dernier composé constituant le flux. Le rapport molaire $K_2MoO_4/K_2CO_3$ est de 3,4.

Ce mélange, placé dans un creuset d'alumine, fermé par un couvercle, est soumis au traitement thermique suivant: montée en température à 500°C à la vitesse de 300°C/h, maintien de cette température pendant 7,5 heures, montée à 1050°C ± 50°C à la vitesse de 200°C/h, maintien à cette température pendant 15 heures, refroidissement à la vitesse de 400°C/h.

Les fibres obtenues de couleur jaune ocre assez pâle, sont séparées, lavées, séchées. Elles sont isomorphes de $K_3 Ti_8 O_{17}$, et de $K_2 Ti_8 O_{17}$, leurs caractéristiques morphologiques ont été précisées ci-dessus.

Dans les exemples décrits ci-dessus les oxydes $Ti O_2$, MgO et $Fe_2 O_3$ peuvent être remplacés par des composés oxygénés facilement décomposables contenant les mêmes cations.

Par ailleurs, d'une manière générale, les oxydes $Ti O_2$ et $M^{II}O$ et $Ti O_2$ et $M^{III}_2 O_3$ peuvent être remplacés, au moins en partie, par des oxydes mixtes des métaux ainsi considérés, les quantités de ces composés devant respecter les formules précisées ci-dessus.

**Exemple 3**

Obtention de $K_3\ Ti_{17}\ CrO_{17}$ sous forme fibreuse; ce composé correspond à la formule B précitée dans laquelle:

$M^I$:K    $M^{III}$:Cr    y=1

Un mélange intime de produits pulvérulents est constitué par broyage et homogénéisation de:

14,4 g de $TiO_2$    1,95 g de $Cr_2O_3$    5,6 g de $K_2CO_3$ et    60 g KCl,

ce dernier composé constituant le flux;le rapport molaire $KCl/K_2CO_3$ est de 20,8.

L'excès de $K_2CO_3$ est d'environ 5 % par rapport aux proportions stoechiométriques. Ce mélange, placé dans une nacelle d'alumine, est soumis au traitement thermique suivant: montée à la température de 700°C à la vitesse de 200°C/h, maintien à cette température pendant 70 heures, refroidissement à la vitesse de 400°C/h.

La réaction se fait sous balayage d'azote, afin d'éviter l'oxydation des ions $Cr^{3+}$ en chromate.

Le produit obtenu est ensuite lavé à l'eau, ce qui entraîne la dissolution totale du flux.

Les fibres ainsi obtenues sont de couleur vert-pâle et isomorphes de $K_3\ Ti_8\ O_{17}$ et de $K_2\ Ti_8\ O_{17}$.

**Exemple 4**

Obtention de $K_3\ Ti_{7,5}\ Ni_{0,5}\ O_{17}$ sous forme fibreuse; ce composé correspond à la formule A, précitée dans laquelle:

$M^I$:K    $M^{II}$:Ni    x=0,5

Un mélange intime de produits pulvérulents est constitué, par broyage et homogénéisation de:

15,41 g de $TiO_2$    0,96 g de NiO    5,59 g de $K_2CO_3$ et    60 g de KCl.

Le rapport molaire $KCl/K_2CO_3$ est de 20,8.

L'excès de $K_2CO_3$ est environ 5 % par rapport aux proportions stoechiométriques.

Ce mélange, placé dans un nacelle d'alumine, est soumis à un traitement thermique identique à celui de l'exemple n° 1.

**Exemple 5**

Obtention de $K_2NaTi_7FeO_{17}$ sous forme fibreuse; ce composé correspond à la formule B précitée dans laquelle:

$M^I$:Na    $M^{III}$:Fe    y=1

Un mélange intime de produits pulvérulents est constitué par broyage et homogénéisation de:

14,63 g de $TiO_2$    2,09 g de $Fe_2O_3$    3,79 g de $K_2CO_3$    1,45 g de $Na_2CO_3$
26,1 g de NaCl et    33,4 g de KCl.

KCl et NaCl forment une solution solide dont le point de fusion pour cette composition est voisin de 680°C et jouent le rôle de flux.

Le rapport molaire $KCl/K_2O$ est de 16,2.

L'excès de carbonates de potassium et de sodium est d'environ 5 % par rapport aux proportions stoechiométriques.

Ce mélange, placé dans une nacelle en alumine, est soumis au traitement thermique suivant: montée en température à 800°C à la vitesse de 200°C/h, maintien à cette températuré pendant 48 heures, refroidissement à la vitesse de 400°C/h.

Les fibres obtenues de couleur jaune-ocre sont ensuite lavées afin d'éliminer l'excédent de flux, puis séchées avec de l'acétone.

Les octatitanates substitués, obtenus selon l'invention sous forme de fibres, présentent des propriétés hydrophiles. Par ailleurs, ces fibres résistent à la potasse concentrée à des températures pouvant atteindre 200°C.

A partir de ces fibres, on réalise des diaphragmes selon les techniques usuelles.

On peut en particulier, en vue de cette réalisation, mélanger ces fibres à du polytétrafluoréthylène en présence d'un agent floculant, le mélange étant soumis ensuite à des opérations de malaxage, calandrage et pliage.

Bien entendu l'invention n'est nullement limitée aux modes d'exécution décrits qui n'ont été donnés qu'à titre d'exemples.

## Revendications

1. Matériau fibreux pour diaphragme d'électrolyseur, utilisant comme électrolyte une solution aqueuse de potasse, caractérisé par le fait que ledit matériau répond à une formule dérivant de celle de l'octatitanate de potassium $K_2 Ti_8 O_{17}$, dans laquelle les ions titane au degré d'oxydation 4 sont substitués partiellement par des cations métalliques stables en site octaédrique et de degré d'oxydation inférieur à quatre, la compensation de charge, du fait de ladite substitution, étant assurée par l'introduction d'ions alcalins supplémentaires choisis parmi le sodium, le potassium et le lithium.

2. Matériau selon la revendication 1, caractérisé par le fait que les cations métalliques de substitution, de valence 2, étant représentés par $M^{II}$, et $M^{I}$ désignant un ion alcalin choisi parmi le sodium, le potassium et le lithium, la formule du matériau est:

$$K_2 M^{I}_{2x} Ti_{8-x} M^{II}_x O_{17} \text{ avec } 0 < x \leqslant 0,5$$

3. Matériau selon la revendication 2, caractérisé par le fait que $M^{II}$ est choisi dans le groupe formé par Mg et Ni.

4. Matériau selon la revendication 1, caractérisé par le fait que les cations métalliques de substitution, de valence 3 étant représentés par $M^{III}$, et $M^{I}$ désignant un ion alcalin choisi parmi le sodium, le potassium et le lithium, la formule du matériau est:

$$K_2 M^{I}_y Ti_{8-y} M^{III}_y O_{17} \text{ avec } 0 < y \leqslant 1$$

5. Matériau selon la revendication 4, caractérisé par le fait que $M^{III}$ est choisi dans le groupe formé par Fe, Al, Cr, Ti, Ga.

6. Matériau selon la revendication 1, caractérisé par le fait que les cations de substitution de valence 2 étant réprésentés par $M^{II}$, ceux de valence 3 par $M^{III}$, et $M^{I}$ désignant un ion alcalin choisi parmi le sodium, le potassium et le lithium, la formule du matériau est

$$K_2 M^{I}_{(2x+y)} Ti_{8-(x+y)} M^{II}_x M^{III}_y O_{17}$$

$$\text{avec } O < 2x+y \leqslant 1$$

7. Procédé de fabrication d'un matériau selon l'une des revendications à 6, caractérisé par le fait qu'il comprend une pyrolyse d'un mélange intime comprenant au moins:

- un composé oxygéné décomposable du titane ou l'oxyde $TiO_2$
- un composé oxygéné décomposable du métal $M^{II}$ de valence 2, et/ou du métal $M^{III}$ de valence 3 et/ou des oxydes correspondants

$$M^{II} O \text{ et/ou } M^{III}_2 O_3$$

- un sel décomposable du métal alcalin $M^{I}$
- un flux

puis l'élimination dudit flux.

8. Procédé selon la revendication 7, caractérisé par le fait que le flux est choisi parmi KCl, un mélange d'halogénures alcalins et le molybdate de potassium.

9. Procédé selon la revendication 7, caractérisé par le fait que le composé oxygéné du titane et le composé oxygéné du métal $M^{II}$ ou $M^{III}$ forment un oxyde mixte.

10. Procédé selon l'une des revendications 7 à 9, caractérisé par le fait que le sel décomposable du métal $M^{I}$ est un carbonate $M^{I}_2 CO_3$.

11. Procédé selon l'une des revendications 7 à 10, caractérisé par le fait que les composés oxygénés du titane et des métaux $M^{II}$ ou $M^{III}$ et le sel du métal alcalin $M^{I}$ sont en proportions stoéchiométriques.

12. Procédé selon l'une des revendications 7 à 10, caractérisé par le fait que l'on prévoit un excès d'environ 5 %, par rapport aux proportions stoéchiométriques, du sel du métal alcalin $M^{I}$.

13. Procédé selon l'une des revendications 7 à 12, caractérisé par le fait que le rapport molaire entre le flux et le sel décomposable de $M^{I}$ est compris entre 2 et 25.

14. Procédé selon l'une des revendications 7 à 13, caractérisé par le fait que le cation de substitution étant

choisi parmi Al, Fe, Ga, la température du traitement de pyrolyse est comprise entre 1000 et 1100° C.

. 15. Procédé selon l'une des revendications 7 à 13, caractérisé par le fait que le cation de substitution étant choisi parmi Cr et Mg, la température du traitement de pyrolyse est comprise entre 700 et 800° C.

16. Procédé selon l'une des revendications 7 à 13, caractérisé par le fait que le cation de substitution étant le titane au degré d'oxydation 3, la température du traitement de pyrolyse est supérieure à 1000° C.

17. Procédé selon l'une des revendications 7 à 13, caractérisé par le fait que le cation de substitution étant le nickel la température du traitement de pyrolyse est comprise entre 800 et 900° C.

18. Procédé selon l'une des revendications 7 à 13, 15 et 16, caractérisé par le fait que le cation de substitution étant le chrome ou le titane, la pyrolyse est effectuée sous atmosphère non oxydante.

19. Diaphragme d'électrolyseur utilisant un matériau défini selon l'une des revendications 1 à 6.

20. Diaphragme d'électrolyseur utilisant un matériau obtenu par le procédé selon l'une des revendications 7 à 18.

**Patentansprüche**

1. Faseriges Material für eine Elekrolysemembran, wobei als Elektrolyt eine wässrige Kalilösung verwendet wird, dadurch gekennzeichnet, daß das Material einer Formel entspricht, die von der des Kaliumoctatitanats $K_2Ti_8O_{17}$ abgeleitet ist, in der die Titanionen mit dem Oxydationsgrad 4 teilweise durch stabile Metallkationen in achteckiger Anordnung und mit einem Oxidationsgrad kleiner als vier substituiert sind, wobei die Ladungskompensation aufgrund der Substitution durch das Einführen von Alkaliionen bewirkt wird, die aus dem Natrium, dem Kalium und dem Lithium ausgewählt werden.

2. Material nach Anspruch 1, dadurch gekennzeichnet, daß, wenn die Substitutions-Metallkationen der Valenz 2 durch $M^{II}$ dargestellt sind und $M^{I}$ ein aus Natrium, Kalium und Lithium ausgewähltes Alkaliion ist, die Formel des Materials ist:.

$K_2\, M^{I}_{2x}\, Ti_{8-x}\, M^{II}_{x}\, O_{17}$ mit $0 < x \leqslant 0{,}5$.

3. Material nach Anspruch 2, dadurch gekennzeichnet, daß $M^{II}$ aus der von Mg und Ni gebildeten Gruppe ausgewählt wird.

4. Material nach Anspruch 1, dadurch gekennzeichnet, daß, wenn die Substitutions-Metallkationen der Valenz 3 durch $M^{III}$ dargestellt werden und $M^{I}$ ein Alkaliion bezeichnet, das aus Natrium, Kalium und Lithium ausgewählt wird, die Formel des Materials ist.:

$K_2\, M^{I}_{y}\, Ti_{8-y}\, M^{III}_{y}\, O_{17}$ mit $0 < y \leqslant 1$

5. Material nach Anspruch 4, dadurch gekennzeichnet, daß $M^{III}$ aus der Gruppe ausgewählt wird, die von Fe, Al, Cr, Ti, Ga gebildet wird.

6. Material nach Anspruch 1, dadurch gekennzeichnet, daß, wenn die Substitutionskationen der Valenz 2 von $M^{II}$, die der Valenz 3 von $M^{III}$ dargestellt werden und $M^{I}$ ein Alkaliion bezeichnet, das aus Natrium, Kalium und Lithium ausgewählt wird, der Formel des Materials ist:

$K_2\, M^{I}_{(2x+y)}\, Ti_{8-(x+y)}\, M^{II}_{x}\, M^{III}_{y}\, O_{17}$ mit $0 < 2x+y \leqslant 1$.

7. Verfahren zur Herstellung eines Materials nach einem der Ansprüche 1 bis 6, dadurch gekennzeichnet, daß es eine Pyrolyse einer guten Mischung umfaßt, die mindestens aufweist:
- eine zersetzbare sauerstoffhaltige Titanverbindung oder das Oxid $TiO_2$,
- eine zersetzbare sauerstoffhaltige Verbindung des Metalls $M^{II}$ der Valenz 2 und/oder der Metalls $M^{III}$ der Valenz 3 und/oder der entsprechenden Oxide $M^{II}O$ und/oder $M^{III}_2\,O_3$,
- ein zersetzbares Salz des Alkalkimetalls $M^{I}$,
- ein Flux,
und dann die Entfernung des Fluxes.

8. Verfahren nach Anspruch 7, dadurch gekennzeichnet, daß der Flux ausgewählt wird aus KCl, einer Mischung alkalischer Halogenide und Kaliummolybdat.

9. Verfahren nach Anspruch 7, dadurch gekennzeichnet, daß die sauerstoffhaltige Titanverbindung und die sauerstoffhaltige Verbindung des Metalls $M^{II}$ oder $M^{III}$ ein Mischoxid bilden.

10. Verfahren nach einem der Ansprüche 1 bis 9, dadurch gekennzeichnet, daß das zersetzbare Salz des Metalls $M^{I}$ ein Karbonat $M^{I}_2CO_3$ ist.

11. Verfahren nach einem der Ansprüche 7 bis 10, dadurch gekennzeichnet, daß die sauerstoffhaltigen Verbindungen von Titan und den Metallen $M^{II}$ oder $M^{III}$ und das Salz des Alkalimetalls $M^{I}$ in stoechiometrischen Anteilen vorliegen.

12. Verfahren nach einem der Ansprüche 7 bis 10, dadurch gekennzeichnet, daß man einen Überschuß von etwa 5 % des Salzes in bezug auf die stoechiometrischen Anteile des Alkalimetalls $M^I$ vorsieht.

13. Verfahren nach einem der Ansprüche 7 bis 12, dadurch gekennzeichnet, daß das Molverhältnis zwischen dem Flux und dem zersetzbaren Salz von $M^I$ zwischen 2 und 25 liegt.

14. Verfahren nach einem der Ansprüche 7 bis 13, dadurch gekennzeichnet, daß, wenn das Substitutionskation aus Al, Fe, Ga ausgewählt wird, die Pyrolysebehandlungstemperatur zwischen 1000 und 1100°C liegt.

15. Verfahren nach einem der Ansprüche 7 bis 13, dadurch gekennzeichnet, daß, wenn das Substitutionskation aus Cr und Mg ausgewählt wird, die Pyrolysebehandlungstemperatur zwischen 700 und 800°C liegt.

16. Verfahren nach einem der Ansprüche 7 bis 13, dadurch gekennzeichnet, daß, wenn das Substitutionskation Titan mit dem Oxidationsgrad 3 ist, die Pyrolysetemperatur über 1000°C liegt.

17. Verfahren nach einem der Ansprüche 7 bis 13, dadurch gekennzeichnet, daß, wenn das Substitutionskation Nickel ist, die Pyrolysebehandlungstemperatur zwischen 800 und 900°C liegt.

18. Verfahren nach einem der Ansprüche 7 bis 13, 15 und 16, dadurch gekennzeichnet, daß, wenn das Substitutionskation Chrom oder Titan ist, die Pyrolyse unter nicht-oxidierender Atmosphäre durchgeführt wird.

19. Elektrolysemembran, die ein Material gemäß einem der Ansprüche 1 bis 6 verwendet.

20. Elektrolysemembran, die ein Material verwendet, welches nach einem der Ansprüche 7 bis 18 hergestellt wurde.

**Claims**

1. A fibrous material for an electrolyzer diaphragm, using as electrolyte an aqueous potash solution, characterized in that said material responds to a formula deriving from that of the potassium octatitanate $K_2Ti_8O_{17}$, in which the titane ions of the oxidation degree 4 are partially substituted by stable metal cations in octahedral situs and of an oxidation degree lower than four, the charge compensation, due to said substitution, being ensured by the introduction of supplementary alcali ions chosen among sodium, potassium and lithium.

2. A material according to claim 1, characterized in that the metal substitution cations of a valence 2 being represented by $M^{II}$, and $M^I$ being an alcali ion chosen among sodium, potassium and lithium, the formula of the material is:

$K_2\,M^I_{2x}\,Ti_{8-x}\,M^{II}_x\,O_{17}$ with $0 < x \leqslant 0{,}5$.

3. A material according to claim 3, characterized in that $M^{II}$ is chosen from the group formed by Mg and Ni.

4. A material according to claim 1, characterized in that the metal substitution cations of a valence 3 being represented by $M^{III}$, and $M^I$ being an alcali ion chosen among sodium, potassium and lithium, the formula of the material is:
$K_2\,M^I_y\,Ti_{8-y}\,M^{III}_y\,O_{17}$ with $0 < y \leqslant 1$.

5. A material according to claim 4, characterized in that $M^{III}$ is chosen from the group formed by Fe, Al, Cr, Ti, Ga.

6. A material according to claim 1, characterized in that, the substitution cations of the valence 2 being represented by $M^{II}$, those of the valence 3 by $M^{III}$, and $M^{II}$ representing an alcali ion chosen from sodium, potassium and lithium, the formula of the material is:

$K_2\,M^I_{(2x+y)}\,Ti_{8-(x+y)}\,M^{II}_x\,M^{III}_y\,O_{17}$ with $O < 2x+y \leqslant 1$.

7. A method of manufacturing a material according to one of claims 1 to 6, characterized in that it comprises a pyrolysis of an intimate mixture comprising at least:
- a decomposable oxygenous compound of titane or the oxide $TiO_2$,
- a decomposable oxygenous compound of the metal $M^{II}$ of the valence 2, and/or the metal $M^{III}$ of the valence 3 and/or the corresponding oxides $M^{II}O$ and/or $M^{III}_2O_3$
- a decomposable salt of the alcali metal $M^I$
- a flux

then the elimination of the flux.

8. A method according to claim 7, characterized in that the flux is chosen from KCl, a mixture of alcaline halogenides and potassium molybdate.

9. A method according to claim 7, characterized in that the oxygenous compound of titane and the oxygenous compound of the metal $M^{II}$ or $M^{III}$ form a mixed oxide.

10. A method according to one of claims 7 to 9, characterized in that the decomposable salt of the metal $M^I$ is

a carbonate $M^I{}_2CO_3$.

11. A method according to one of claims 7 to 10, characterized in that the oxygenous compounds of titane and the metals $M^{II}$ or $M^{III}$ and the salt of the alcali metal $M^I$ are present in stoechiometric proportions.

12. A method according to one of claims 7 to 10, characterized in that an excess of about 5 % of the salt of the alcali metal $M^I$ is provided with respect to the stoechiometric proportions.

13. A method according to one of claims 7 to 12, characterized in that the molar ratio between the flux and the decomposable salt of $M^I$ is situated between 2 and 25.

14. A method according to one of claims 7 to 13, characterized in that the substitution cation being chosen among Al, Fe, Ga, the temperature of the pyrolysis treatment is comprised between 1000 and 1100° C.

15. A method according to one of claims 7 to 13, characterized in that the substitution cation being chosen among Cr and Mg, the temperature of the pyrolysis treatment is comprised between 700 and 800° C.

16. A method according to one of claims 7 to 13, characterized in that the substitution cation being titane with the oxidation degree 3, the temperature of the pyrolysis treatment exceeds 1000° C.

17. A method according to one of claims 7 to 13, characterized in that the substitution cation being nickel, the temperature of the pyrolysis treatment is comprised between 800 and 900° C.

18. A method according to one of claims 7 to 13, 15 and 16, characterized in that the substitution cation being chrome or titane, the pyrolysis is carried out in a non-oxidizing atmosphere.

19. An electrolyzer diaphragm using a material as defined in one of claims 1 to 6.

20. An electrolyzer diaphragm using a material obtained by the method according to one of claims 7 to 18.